# EUROPÄISCHE PATENTSCHRIFT

(11) **EP 1 606 136 B1**
(45) Veröffentlichungstag und Bekanntmachung des Hinweises auf die Patenterteilung: **25.02.2009**
(21) Anmeldenummer: 04716545.1
(22) Anmeldetag: 03.03.2004
(51) Int. Cl.: B60N 2/015

(54) **VORRICHTUNG ZUM VERBINDEN EINES FAHRZEUGSITZES MIT EINEM FAHRZEUGBODEN**
DEVICE FOR CONNECTING A VEHICLE SEAT TO A VEHICLE FLOOR
DISPOSITIF POUR RACCORDER UN SIEGE DE VEHICULE A UN PLANCHER DE VEHICULE

(30) Priorität: 14.03.2003 DE 20304508 U
(43) Veröffentlichungstag der Anmeldung: 21.12.2005
(73) Patentinhaber: Brose Fahrzeugteile GmbH & Co. Kommanditgesellschaft, Coburg, 96450 Coburg (DE)
(72) Erfinder: FISCHER, Matthias, 96317 Kronach (DE); HOFMANN, Jochen, 96257 Marktgraitz (DE)
(74) Vertreter: Baumgärtel, Gunnar
(86) Internationale Anmeldenummer: PCT/DE2004/000438
(87) Internationale Veröffentlichungsnummer: WO 2004/080750

(56) Entgegenhaltungen:
- EP-A- 1 068 985
- DE-A- 4 404 935
- DE-A- 19 514 380
- DE-U- 29 522 335
- US-A- 4 736 985
- US-A- 5 238 285
- US-A- 5 626 391
- US-A- 5 667 232
- US-A- 5 730 480
- US-A1- 2002 043 605
- US-B1- 6 234 574
- US-B1- 6 244 649
- US-B1- 6 345 856

## Beschreibung

Die Erfindung betrifft eine Vorrichtung zum Verbinden eines Fahrzeugsitzes mit einem Fahrzeugboden nach dem Oberbegriff des Anspruchs 1.

Aus der DE 44 04 935 A1 ist eine Vorrichtung zum Verbinden eines Fahrzeugsitzes mit einem Fahrzeugboden bekannt, der in Fahrtrichtung des Fahrzeuges vordere und hintere Lagerelemente zur Aufnahme von mit dem Fahrzeugsitz verbundenen vorderen und hinteren Verbindungselementen aufweist. Das hintere Verbindungselement besteht aus einem Stützteil und einer mit dem Stützteil gelenkig verbundenen Verriegelungseinrichtung, die einen zwei Hebelarme aufweisenden Verriegelungshebel enthält, der um eine mit dem Stützteil verbundene Befestigungsachse verschwenkbar ist. Einer der beiden Hebelarme des Verriegelungshebels ist als Verriegelungshaken ausgebildet, der in Eingriff mit einem Bolzen des hinteren Lagerelements des Fahrzeugbodens bringbar ist.

Durch diese Konstruktion verschiebt die Verriegelungseinrichtung den Fahrzeugsitz mit dem Entriegeln in eine Entnahmeposition, während sie beim Einbau des Fahrzeugsitzes zunächst in einer Freigabestellung gehalten und anschließend in eine Verriegelungsstellung überführt wird. Dadurch wird sowohl eine einfache und sichere Sitzverriegelung als auch eine erleichterte Handhabung bei der Entriegelung und Entnahme des Fahrzeugsitzes gewährleistet. Zur Anordnung der Verriegelungseinrichtung mit dem zwei Hebelarme aufweisenden Verriegelungshebel ist jedoch ein entsprechender Bauraum unterhalb des Sitzseitenteils des Fahrzeugsitzes erforderlich.

Aus der US-A-5 730 480 ist ein Fahrzeugsitz gemäß dem Oberbegriff des Anspruchs 1 bekannt, der in einer Nichtbenutzungsposition um ein an der Außenseite eines Sitzuntergestells bzw. Sitzkissens angeordnetes Gelenk nach außen zur Seitenwand einer Fahrzeugkarosserie schwenkbar ist. Eine an der dem Gelenk gegenüber liegenden Innenseite des Sitzuntergestells angeordnete Sperrvorrichtung besteht aus einem Bolzenelement, das am Fahrzeugboden befestigt ist, und einer mit dem Sitzuntergestell verbundenen Sperreinrichtung, die den Fahrzeugsitz in einer Benutzungsposition mit dem Bolzenelement verbindet, so dass der Fahrzeugsitz seitlich schwenkbar, aber nicht dem Fahrzeuginnenraum entnehmbar ist. Die Sperreinrichtung führt dem entsprechend ausschließlich Schwenkbewegungen aus und weist ein Basisteil mit einem Aufnahmeschlitz zur Aufnahme des Bolzenelements, eine um eine Schwenkwelle schwenkbar mit dem Basisteil verbundene Verriegelungsplatte, die zwischen einer Verriegelungsposition, in der die Verriegelungsplatte das Bolzenelement in dem Aufnahmeschlitz verriegelt, und einer Bereitschaftsposition, in der die Verriegelungsplatte das Bolzenelement freigibt, schwenkbar ist, und eine um die Schwenkwelle schwenkbar mit dem Basisteil verbundenen Sperrplatte, die zwischen einer die Verriegelungsplatte in der Verriegelungsposition sperrenden Sperrposition und einer die Verriegelungsplatte entsperrenden Entsperrposition schwenkbar ist, auf. Eine Vorspannfeder dient zum Vorspannen der Verriegelungsplatte in die Bereitschaftsposition und zum Vorspannen der Sperrplatte in die Verriegelungsposition, während ein schwenkbar mit dem Basisteil verbundener Betätigungshebel, der zwischen einer Rückhalteposition, in der eine Kontaktkante des Betätigungshebels gegen das Bolzenelement stößt, und einer Freigabeposition schwenkbar ist, in der die Kontaktkante außer Eingriff mit dem Bolzenelement gebracht wird. Weiterhin ist eine Verbindungseinrichtung vorgesehen, die den Betätigungshebel in die Rückhalteposition bringt, wenn die Verriegelungsplatte und die Sperrplatte die Verriegelungsposition einnehmen.

Aufgabe der vorliegenden Erfindung ist es, eine Vorrichtung zum Verbinden eines Fahrzeugsitzes mit einem Fahrzeugboden der eingangs genannten Art anzugeben, die mit wenigen Bauteilen bei geringem Platzbedarf und insbesondere ohne zusätzlichen Bauraum zwischen dem Fahrzeugboden und dem Sitzseitenteil eine sichere und spielfreie Verriegelung des Fahrzeugsitzes auch im Crashfall gewährleistet und einen hohen Bedienungskomfort bei der Entnahme sowie beim Einsetzen des Fahrzeugsitzes sicherstellen.

Diese Aufgabe wird erfindungsgemäß durch die Merkmale des Anspruchs 1 gelöst.

Die erfindungsgemäße Vorrichtung erfordert nur wenige Bauteile und hat einen geringen Platzbedarf, ohne zusätzlichen Bauraum zwischen dem Fahrzeugboden und dem Sitzseitenteil zu beanspruchen, gewährleistet eine spielfreie Verriegelung mit einer horizontalen Massenkompensation im Crashfall und stellt einen hohen Bedienungskomfort bei der Entnahme des Fahrzeugsitzes aus dem Fahrzeug sowie beim Einsetzen des Fahrzeugsitzes in das Fahrzeug sicher.

Die zwischen dem Fahrzeugsitz, dem Verriegelungselement und dem Entriegelungshebei wirksame Kulissensteuerung erfüllt dabei sowohl eine Verriegelungs- als auch eine Entriegelungsfunktion und kann als flaches Bauteil derart an einem statische Funktionen erfüllenden Sitzseitenteil oder einer Führungsschiene des Fahrzeugsitzes angeordnet werden, dass der Platzbedarf minimiert wird und dadurch auch kein zusätzlicher Bauraum zwischen dem Fahrzeugboden und dem Sitzseitenteil erforderlich ist.

Weiterhin gewährleistet die Kulissensteuerung mit ihren zwei Bewegungsphasen beim Entriegeln des Fahrzeugsitzes eine definierte Zwischenstellung am Ende der ersten Bewegungsphase mit einer Selbsthaltung des Verriegelungselements, in der die Voraussetzungen für eine Entriegelung gegeben sind, eine Unterbrechung der weiteren Entnahme des Fahrzeugsitzes aber nicht zum Lösen der Verriegelung führt. Erst bei weiterer Bewegung des Entriegelungshebels oder des Fahrzeugsitzes in Entnahmerichtung wird der Fahrzeugsitz vom Fahrzeugboden gelöst und kann mit geringem Kraftaufwand dem Fahrzeug entnommen werden.

Die Aufteilung in zwei Bewegungsphasen bei der Entriegelung des Fahrzeugsitzes schafft auch die Voraussetzung dafür, dass eine selbsttätige Verriegelung des Fahrzeugsitzes beim Wiedereinsetzen in das Fahrzeug beim Erreichen einer Endposition sichergestellt ist, da auch beim Einsetzen des Fahrzeugsitzes in das Fahrzeug nur der Zustand erreicht werden muss, der am Ende der ersten Bewegungsphase bei der Entnahme des Fahrzeugsitzes erreicht ist.

Schließlich gewährleistet die Kulissensteuerung auch eine spielfreie Verriegelung des Fahrzeugsitzes mit dem Fahrzeugboden, die insbesondere im Crashfall eine Massenkompensation bewirkt, d.h. Bewegungen des Sitzseitenteils oder der Führungsschiene in Fahrzeuglängsrichtung und damit unerwünschte Relativbewegungen bis hin zur Trennung des Fahrzeugsitzes vom Fahrzeugboden unterbindet.

Um sicherzustellen, dass die Verriegelung des Fahrzeugsitzes mit dem Fahrzeugboden bis zum Ende der ersten Phase der Kulissensteuerung nicht aufgehoben wird, schaltet nach einem weiterführenden Merkmal der erfindungsgemäßen Lösung die Kulissensteuerung das Verriegelungselement bei nicht betätigtem Entriegelungshebel in der ersten Phase zur Entriegelung des Fahrzeugsitzes über den gesamten Verstellweg des Entriegelungshebels bis zum Erreichen der vorgegebenen Zwischenstellung des Entriegelungshebels in die Verriegelungsstellung zurück.

Mit dem Beginn der zweiten Phase, d.h. bei einer Fortsetzung der Entnahme des Fahrzeugsitzes schaltet die Kulissensteuerung das Verriegelungselement um und spannt es in Richtung auf die Entriegelungsstellung vor, so dass das Verriegelungselement selbsttätig in der geöffneten Position, d.h. in der Entriegelungsstellung gehalten wird.

Eine vorteilhafte Ausgestaltung der erfindungsgemäßen Lösung besteht darin, dass die Zwischenstellung des Entriegelungshebels durch einen am Sitzseitenteil oder der Führungsschiene angeordneten Anschlag bestimmt ist und dass die zweite Phase zur Entriegelung des Fahrzeugsitzes durch eine weitere Betätigung des Entriegelungshebels in Richtung auf eine Entriegelung des Fahrzeugsitzes eingeleitet wird.

Der Anschlag für den Entriegelungshebel schafft eine definierte Position des Entriegelungshebels beim Entriegeln des Fahrzeugsitzes, in der das Ende der ersten Phase der Kulissensteuerung erreicht ist. Wird zur weiteren Entnahme des Fahrzeugsitzes der Entriegelungshebel gegen den Anschlag gedrückt, so wird die zweite Phase der Kulissensteuerung eingeleitet, in der das Verbindungselement an eine Klaue des Verriegelungselements anschlägt und dabei das Verriegelungselement in die Entriegelungsstellung schwenkt. Dadurch wird das Verriegelungselement aus seiner Verriegelung mit dem Bodenbolzen gelöst und der am Anschlag anliegende Entriegelungshebel kann als Handhabe zur weiteren Entnahme des Fahrzeugsitzes verwendet werden.

Um sicherzustellen, dass der Entriegelungshebel bis zum Ende der ersten Phase der Kulissensteuerung wieder in seine der Verriegelung des Fahrzeugsitzes entsprechenden Stellung zurückgeführt wird, ist der Entriegelungshebel in der ersten Phase in Richtung auf die Verriegelungsstellung vorgespannt. Da das Schaltelement der Kulissensteuerung bis zum Ende der ersten Bewegungsphase der Kulissensteuerung noch nicht umgeschaltet hat, führt die Federvorspannung des Entriegelungshebels zu einer ungehinderten Rückführung des Entriegelungshebels in die Ausgangsstellung, in der der Fahrzeugsitz mit dem Fahrzeugboden verriegelt ist.

Erfindungsgemäß weist die Kulissensteuerung ein erstes Kulissensteuerelement zur Erzeugung einer Schiebe- und Schwenkbewegung des Verriegelungselements, ein zweites Kulissensteuerelement zur Führung des Verriegelungselements in Längsrichtung des Fahrzeugsitzes und Bereitstellung einer Schwenkachse für das Verriegelungselement, ein drittes Kulissensteuerelement zur Steuerung und Verriegelung sowie Entriegelung des Verriegelungselements und eine Schaltfeder auf, die das Verriegelungselement in der Verriegelungsstellung und in der ersten Phase zur Entriegelung des Fahrzeugsitzes in Richtung auf eine Aufrechterhaltung der Verriegelung zwischen dem Verbindungselement und dem Verriegelungselement und in der zweiten Phase zur Entriegelung des Fahrzeugsitzes das Verriegelungselement in Richtung auf die Entriegelungsstellung vorspannt,

Durch diese Aufteilung der Kulissensteuerung in einzelne Kulissensteuerelemente wird die Entriegelung des Fahrzeugsitzes in voneinander getrennten Bewegungsphasen durchgeführt, in denen jeweils definierte und in Bezug auf die Verriegelung bzw. Entnahme des Fahrzeugsitzes sichere Zustände gewährleistet sind.

Eine Ausführungsform der Kulissensteuerung ist dadurch gekennzeichnet, dass die Kulissensteuerelemente im Verriegelungselement angeordnete erste, zweite und dritte Kulissen aufweisen, dass in die erste und zweite Kulisse mit dem Sitzseitenteil oder der Führungsschiene verbundene erste und zweite Führungsbolzen eingreifen, dass in die dritte Kulisse ein mit dem Entriegelungshebel verbundener Steuer- und Verriegelungsbolzen eingreift und dass die Schaltfeder zwischen dem Verriegelungselement und einer Anbindung am Sitzseitenteil oder der Führungsschiene angeordnet ist.

Weiterhin weist die dritte Kulisse eine Anlagekante für den Steuer- und Verriegelungsbolzen und einen Freischnitt für den Steuer und Verriegelungsbolzen auf, damit die Entriegelungsstellung erreicht werden kann. Der Entriegelungshebel ist in Bezug auf die Anlagekante der ersten Kulisse so angelenkt, dass beim Betätigen des Entriegelungshebels das Verriegelungselement gegen die Federkraft der Schaltfeder bewegt wird.

Da der Steuer- und Verriegelungsbolzen bis zum Ende der ersten Phase der Kulissensteuerung an der Anlagekante anliegt, wird der Entriegelungshebel beim Abbrechen einer Entnahme des Fahrzeugsitzes infolge der Vorspannung des Entriegelungshebels in Richtung auf dessen Ausgangsstellung in diese Stellung zurückgeführt. Erst bei Fortsetzung der Entnahme des Fahrzeugsitzes wird der mit dem Entriegelungshebel verbundene Steuer- und Verriegelungsbolzen In den Freischnitt der dritten Kulisse bewegt und in Verbindung mit dem Umschalten der Verriegelungsstellung in die Entriegelungsstellung in der zweiten Phase der Kulissensteuerung in dieser Position gehalten.

Eine vorteilhafte Weiterbildung dieser Ausführungsform der erfindungsgemäßen Lösung ist dadurch gekennzeichnet, dass die Anlagekante einen vertikalen Schlitz begrenzt, dessen Schlitzbreite dem Durchmesser des Steuer- und Verriegelungsbolzen entspricht, und in den Freischnitt übergeht.

Da der Steuer- und Verriegelungsbolzen in der Verriegelungsstellung sowie in der ersten Phase der Kulissensteuerung im wesentlichen spielfrei im vertikalen Schlitz der dritten Kulisse geführt ist und der Entriegelungshebel über seine Anlenkung mit dem Sitzseitenteil oder der Führungsschiene verbunden ist, wird eine ebenfalls spielfreie Verbindung zwischen dem Verriegelungselement und dem Bodenbolzen sichergestellt, so dass Relativbewegungen zwischen dem Sitzseitenteil oder der Führungsschiene und dem Fahrzeugboden ausgeschlossen werden können.

Eine weitere Ausgestaltung der erfindungsgemäßen Lösung ist dadurch gekennzeichnet, dass die zweite Kulisse als in Längsrichtung des Fahrzeugsitzes ausgerichtete Längskulisse ausgebildet ist, die bei einem durch die Betätigung des Entriegelungshebels bewirktes Entlanggleiten des Steuerungs- und Verriegelungsbolzens an der Anlagekante der dritten Kulisse in der ersten Phase zur Entriegelung des Fahrzeugsitzes im Zusammenwirken mit den Führungsbolzen ausschließlich eine in Längsrichtung gerichtete Bewegung des Verriegelungselements in Richtung auf eine Anlenkung des Entriegelungshebels zulässt.

Die erste Kulisse weist einen in Längsrichtung des Fahrzeugsitzes ausgerichteten Schiebeabschnitt und einen auf einem Radius um den zweiten Führungsbolzen liegenden Schwenkabschnitt auf, wobei der in die erste Kulisse eingreifende erste Führungsbolzen in der ersten Phase zur Entriegelung des Fahrzeugsitzes in den Schiebeabschnitt und in der zweiten Phase zur Entriegelung des Fahrzeugsitzes in den Schwenkabschnitt der ersten Kulisse eingreift, in dem das Verriegelungselement um den zweiten Führungsbolzen geschwenkt wird.

Die Formgebung der ersten Kulisse bewirkt den Umschaltvorgang beim Übergang der ersten Phase der Kulissensteuerung zur zweiten Phase bei fortgesetzter Betätigung des Entriegelungshebels bei der Entnahme des Fahrzeugsitzes aus dem Fahrzeug und ermöglicht ein Schwenken des Verriegelungselements um den zweiten Führungsbolzen mit der Möglichkeit der weiteren Entnahme des Fahrzeugsitzes über den am Anschlag anliegenden Entriegelungshebel.

Die Vorspannung des Entriegelungshebels in Richtung auf seine Ausgangsstellung wird vorzugsweise mittels einer Entriegelungshebelfeder bewirkt, die auf der dem Steuer- und Verriegelungsbolzen entgegengesetzten Seite des Entriegelungshebels in Bezug auf die mit einem Betätigungsgriff versehene Anlenkung des Entriegelungshebels angelenkt ist.

Um mit dem Beginn der zweiten Phase die Entriegelung sicherzustellen, ist die Schaltfeder derart mit dem Verriegelungselement verbunden, dass das von der Schaltfeder in Bezug auf den zweiten Führungsbolzen auf das Verriegelungselement ausgeübte Drehmoment größer ist als das von der Entriegelungshebelfeder ausgeübte Drehmoment auf das Verriegelungselement in Bezug auf den zweiten Führungsbolzen.

In der ersten Phase der Entriegelung des Fahrzeugsitzes führt somit das Verriegelungselement durch die Kulissensteuerung eine reine Schiebebewegung in Fahrzeuglängsrichtung durch bis der Entriegelungshebel zur Anlage an dem Anschlag kommt. Durch die Wirkung der Schaltfeder wird bis zum Ende der ersten Phase der Entriegelungsvorgang reversiert und das Verriegelungselement in seine ursprüngliche Verriegelungsstellung sowie der Entriegelungshebel durch die Wirkung der Entriegelungshebelfeder in die verriegelte Ausgangsstellung zurückgeführt. Dadurch ist der Fahrzeugsitz bis zum Ende der ersten Phase nicht entriegelt. Mit Beginn der zweiten Phase kann der Fahrzeugsitz über den am Anschlag anliegenden Entriegelungshebel durch das Umschalten der Kulissensteuerung entriegelt und dem Fahrzeug entnommen werden.

Vorzugsweise ist der Entriegelungshebel mit einer Kennung versehen, die in der Entriegelungsstellung des Fahrzeugsitzes sichtbar ist.

Die Kennung signalisiert dem Benutzer, dass sich der Fahrzeugsitz in der entriegelten Stellung befindet, in der die Schaltfeder in Richtung auf die entriegelte Position vorgespannt ist und die Entriegelungsposition hält.

Zur automatischen Verriegelung des Fahrzeugsitzes mit dem Fahrzeugboden weist das Verriegelungselement in einer weiteren Ausführungsform eine in der Verriegelungsstellung um den Bodenbolzen greifende Klaue auf, gegenüber der eine Steuerkante des Verriegelungselements angeordnet ist, die bei einem Einsetzen des Fahrzeugsitzes an den Bodenbolzen anstößt und eine selbsttätige Verriegelung des Verriegelungselements mit dem Bodenbolzen auslöst.

Vorzugsweise schwenkt bei der selbsttätigen Verriegelung des Verriegelungselements mit dem Bodenbolzen das Verriegelungselement durch die auf den Bodenbolzen auftreffende Steuerkante gegen die Federkraft der Schaltfeder um den zweiten Führungsbolzen in die Verriegelungsstellung, in der die Klaue des Verriegelungselements um den Bodenbolzen greift.

Zur Erleichterung beim Einsetzen des Fahrzeugsitzes in das Fahrzeug und anschließenden Verriegelung des Verriegelungselements mit dem Bodenbolzen weist ein mit dem Sitzseitenteil oder der Führungsschiene verbundener Lagerbock zu beiden Seiten einer dem Bodenbolzen angepassten Ausnehmung Einführungsschrägen auf, die beim Einsetzen des Fahrzeugsitzes den Lagerbock zum Bodenbolzen zentrieren.

Anhand eines in der Zeichnung dargestellten Ausführungsbeispieles soll der der Erfindung zugrunde liegende Gedanke näher erläutert werden. Es zeigen:
- Fig. 1: eine schematische Seitenansicht eines Fahrzeugsitzes, der über über eine vordere Sitzanbindung und eine hintere Sitzverriegelung mit einem Fahrzeugboden verbunden ist;
- Fig. 2: eine Detailansicht der hinteren Sitzverriegelung in einer Verriegelungsstellung;
- Fig. 3: eine Detailansicht der hinteren Sitzverriegelung am Ende einer ersten Phase einer Kulissensteuerung der hinteren Sitzverriegelung und
- Fig. 4: eine Detailansicht der hinteren Sitzverriegelung im entriegelten Zustand.

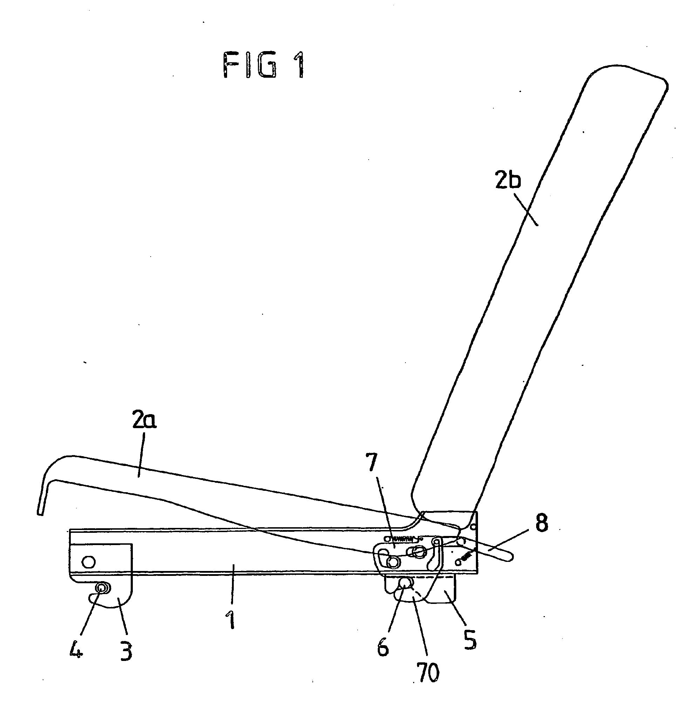

Der in Fig. 1 in einer schematischen Seitenansicht dargestellte Fahrzeugsitz weist ein Sitzseitenteil oder eine Führungsschiene 1 auf, an dem ein Sitzpolster 2a befestigt und eine Sitzlehne 2b schwenkbar angelenkt sind. Das Sitzseitenteil oder die Führungsschiene 1 ist über eine vordere Sitzanbindung und eine hintere Sitzverriegelung mit einem Fahrzeugboden verbunden. Die vordere Sitzanbindung besteht aus einer nach vorne offenen Klaue 3, in die ein bodenfester Bolzen 4 eingreift. Die hintere Sitzverriegelung besteht aus einem mit dem Sitzseitenteil oder der Führungsschiene 1 verbundenen Lagerbock 5, der in einer Ausnehmung einen mit dem Fahrzeugboden verbundenen Bodenbolzen 6 aufnimmt, sowie aus einem Verriegelungselement 7, das in einer Verriegelungsstellung mit einer Klaue 70 um den Bodenbolzen 6 greift.

Mittels eines Entriegelungshebels 8 kann die Verriegelungsstellung aufgehoben werden, so dass sich das Verriegelungselement 7 außer Eingriff mit dem Bodenbolzen 6 befindet und der Fahrzeugsitz entgegen der Fahrtrichtung aus seiner Verankerung mit dem bodenfesten Bolzen 4 sowie dem Bodenbolzen 6 gelöst und dem Fahrzeug entnommen werden kann.

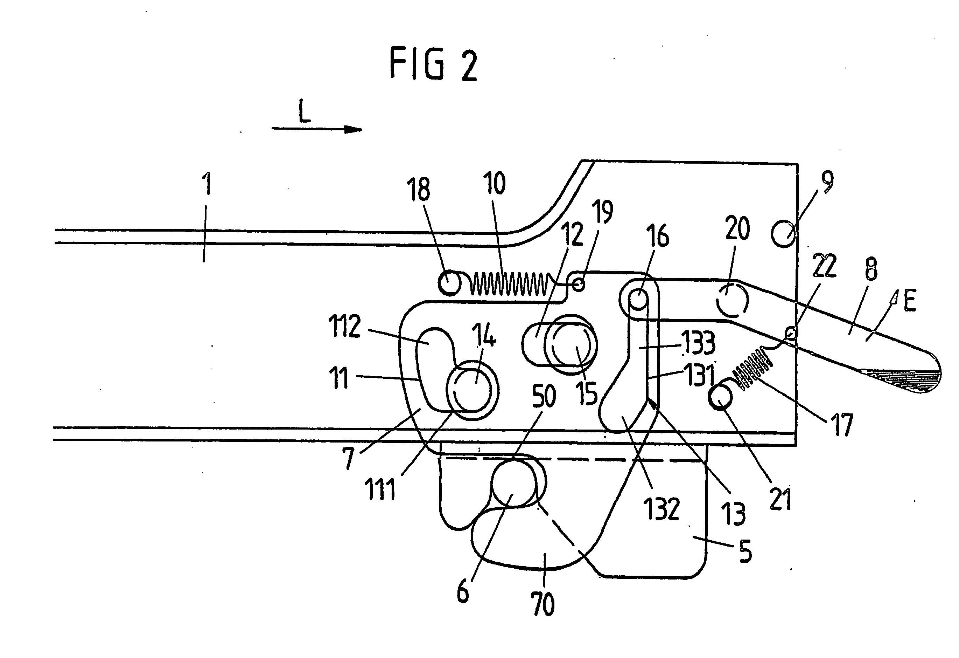

Die Verriegelung des Fahrzeugsitzes mit dem Fahrzeugboden sowie die einzelnen Phasen der Entriegelung zur Entnahme des Fahrzeugsitzes werden nachfolgend unter Bezugnahme auf die Fig. 2 bis 4 der Zeichnung beschrieben.

Fig. 2 zeigt eine Ansicht der hinteren Sitzverriegelung des Fahrzeugsitzes in der Verriegelungsstellung, in der sich der Bodenbolzen 6 in einer der Kontur des Bodenbolzens 6 angepassten Ausnehmung 50 des mit dem Sitzseitenteil oder der Führungsschiene 1 verbundenen Lagerbocks 5 befindet und von der Klaue 70 des Verriegelungselements 7 umfasst wird, so dass der Bodenbolzen 6 von der Ausnehmung 50 des Lagerbocks 5 und der Klaue 70 des Verriegelungselements 7 umschlossen ist.

Das Verriegelungselement 7 ist mit einer Kulissensteuerung versehen, die durch eine Betätigung des Entriegelungshebels 8 aufgelöst und im folgenden beschrieben wird.

Ein erstes Kulissensteuerelement besteht aus einer im Verriegelungselement 7 angeordneten ersten Kulisse 11, in die ein erster Führungsbolzen 14 eingreift und seine Position in Bezug auf die erste Kulisse 11 von einem Schiebeabschnitt 111 zu einem Schwenkabschnitt 112 verlagern kann, der einen Radius um einen zweiten Führungsbolzen 15 beschreibt, der in eine in Fahrzeuglängsrichtung ausgerichtete zweite oder Längskulisse 12 eines zweiten Kulissensteuerelements eingreift und eine Schwenkachse für das Verriegelungselement bereitstellt. Ein drittes Kulissensteuerelement setzt sich aus einer im Verriegelungselement 7 vorgesehenen dritten Kulisse 13 und einem mit dem Ende des Entriegelungshebels 8 verbundenen Steuer- und Verriegelungsbolzen 16 zusammen. Die dritte Kulisse 13 weist eine senkrecht zur Fahrzeuglängsrichtung ausgerichtete Anlagekante 131 sowie einen Freischnitt 132 auf. Die Anlagekante 131 ist Teil eines vertikalen Schlitzes 133 der dritten Kulisse 13, deren Schlitzbreite dem Durchmesser des Steuer-und Verriegelungsbolzens 16 entspricht. Die Anlagekante 131 geht in ihrem unteren Ende in den Freischnitt 132 für den Steuer- und Verriegelungsbolzen 16 über, damit das Verriegelungselement 7 die Entriegelungsposition erreichen kann.

Der Entriegelungshebel 8 ist an einer mit dem Sitzseitenteil oder der Führungsschiene 1 verbundenen und mit einem Betätigungsgriff versehenen Anlenkung 20 angelenkt und über eine Entriegelungshebelfeder 17 vorgespannt, die einerseits über eine erste Federanlenkung 21 mit dem Sitzseitenteil oder der Führungsschiene 1 und über eine zweite Federanlenkung 22 mit dem Entriegelungshebel 8 verbunden ist.

Eine Schaltfeder 10 ist einerseits an einem mit dem Sitzseitenteil oder der Führungsschiene 1 verbundenen Stift 18 und andererseits mit einer Öffnung 19 des Verriegelungselements 7 verbunden und im Wesentlichen in Fahrzeuglängsrichtung ausgerichtet.

In der in Fig. 2 dargestellten Verriegelungsstellung befindet sich der mit dem Entriegelungshebel 8 verbundene Steuer- und Verriegelungsbolzen 16 aufgrund der durch die Entriegelungshebelfeder 17 verursachten Vorspannung des Entriegelungshebels 8 am oberen Anschlag des vertikalen Schlitzes 133 der dritten Kulisse 13.

Weiterhin befindet sich der erste Führungsbolzen 14 des ersten Kulissensteuerelements 11, 14 am in Fahrtrichtung hinteren Anschlag des Schiebeabschnitts 111 der für eine Schiebe- und Schwenkbewegung zuständigen ersten Kulisse 11. Der zweite Führungsbolzen 15 befindet sich ebenfalls an dem in Fahrtrichtung hinteren Anschlag der zweiten Kulisse oder Längskulisse 12 des zweiten Kulissensteuerelements 12, 15.

In dieser Verriegelungsstellung ist die Schaltfeder 10 in Richtung auf die verriegelte Position des Verriegelungselements 7 vorgespannt und der Steuer- und Verriegelungsbolzen 16 sichert die Verriegelungsposition, wobei dessen Stellung sowohl durch die als Zugfeder ausgebildete Schaltfeder 10.als auch durch die ebenfalls als Zugfeder ausgebildete Entriegelungshebelfeder 17 gesichert ist, so dass der Steuer- und Verriegelungsbolzen 16 nicht entriegelt werden kann. Dieses Zusammenwirken der Schaltfeder 10 und der Entriegelungshebelfeder 17 in Verbindung mit der Positionierung des Steuer- und Vierriegelungsbolzens 16 im vertikalen Schlitz 133 der dritten Kulisse 13 sichert die spielfreie Positionierung des Fahrzeugsitzes auch im Crashfall über die Verbindung des Steuer-und Verriegelungsbolzens 16 mit der Anlenkung 20 des Entriegelungshebels 8.

Zur Entriegelung des Fahrzeugsitzes wird der Entriegelungshebel 8 in Richtung des Pfeiles E gegen die Vorspannkraft der Entriegelungshebelfeder 17 um die Anlenkung 20 verschwenkt, wobei der Steuer- und Verriegelungsbolzen 16 entlang der Anlagekante 131 der dritten Kulisse 13 bewegt wird. Aufgrund der in der ersten und zweiten Kulisse 11, 12 gelagerten ersten und zweiten Führungsbolzen 14, 15 ist nur eine Längsbewegung des Verriegelungselments 7 in Richtung des Pfeiles L möglich, das somit gegen die Vorspannkraft der Schaltfeder 10 entgegen der Fahrtrichtung bewegt wird, bis der Entriegelungshebel 8 an dem mit dem Sitzseitenteil oder der Führungsschiene 1 verbundenen Anschlag 9 zur Anlage kommt.

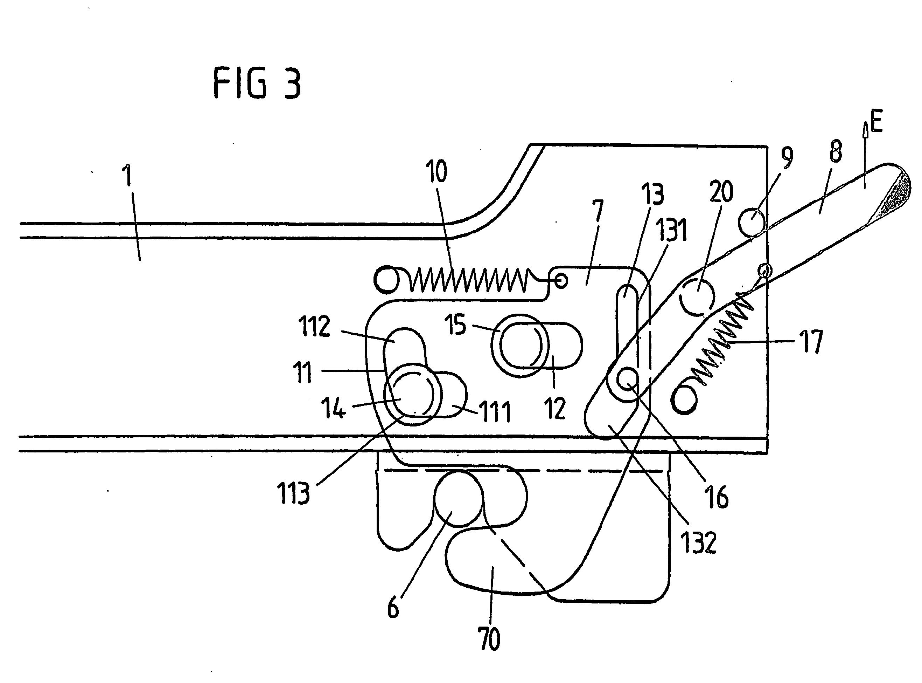

In dieser in Fig. 3 dargestellten Zwischenstellung am Ende einer ersten Phase der Entriegelung des Fahrzeugsitzes mit einer reinen Verschiebebewegung des Verriegelungselements 7 von der Verriegelungsposition zu der in Fig. 3 dargestellten Position befindet sich der erste Führungsbolzen 14 am Übergang 113 zwischen dem Schiebeabschnitt 111 und dem Schwenkabschnitt 112 der ersten Kulisse 11 und der zweite Führungsbolzen 15 am vorderen Anschlag der zweiten Kulisse 12. Damit ist der Fahrzeugsitz für eine Entriegelung vorbereitet, jedoch noch nicht entriegelt, so dass bei einem Abbrechen des Entriegelungsvorganges beispielsweise durch Freigabe des Entriegelungshebels 8 die ursprüngliche, in Fig. 2 dargestellte Verriegelungsstellung automatisch wieder hergestellt wird, da die Schaltfeder 10 und die Entriegelungshebelfeder 17 in Richtung auf eine Rückführung des Verriegelungselements 7 und des Entriegelungshebels 8 in die Verriegelungsstellung wirksam sind.

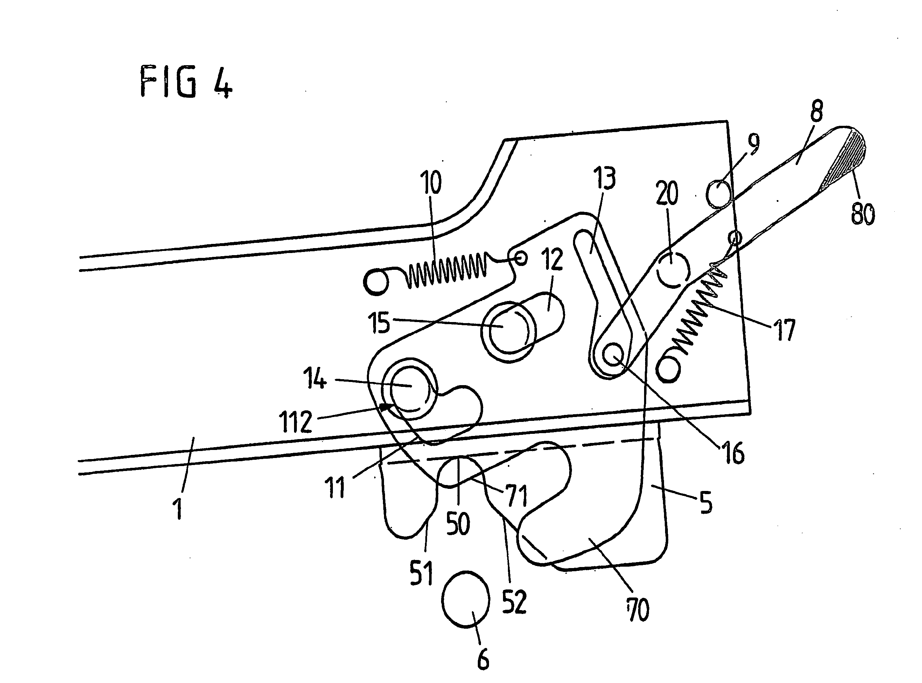

Wird der Entriegelungshebel 8 nach dem Erreichen der in Fig. 3 dargestellten Zwischenstellung weiterhin in Richtung des Pfeiles E betätigt, so wird die in Fig. 4 schematisch dargestellte zweite Phase der Entriegelung des Fahrzeugsitzes eingeleitet.

Da am Ende der in Fig. 3 dargestellten ersten Phase der Entriegelung des Fahrzeugsitzes der Entriegelungshebel 8 an dem mit dem Sitzseitenteil oder der Führungsschiene 1 verbundenen Anschlag 9 anliegt, führt ein weiteres Anheben des Entriegelungshebels 8 dazu, dass der Bodenbolzen 6 an eine Klaue 70 des Verriegelungselements 7 anschlägt und dabei das Verriegelungselement 7 in die Entriegelungsstellung schwenkt. Durch die Wirkung der Schaltfeder 10 wird das Verriegelungselement 7 um den zweiten Führungsbolzen 15 verschwenkt bis der erste Führungsbolzen 14 zur Anlage an der Endkante des Schwenkabschnitts 112 der ersten Kulisse 11 kommt. Durch die Schwenkbewegung des Verriegelungselements 7 wird die Klaue 70 außer Eingriff mit dem Bodenbolzen 6 geschwenkt und löst somit die Verriegelung des Sitzseitenteils oder der Führungsschiene 1 und damit des Fahrzeugsitzes mit dem Bodenbolzen 6.

Da das von der Schaltfeder 10 auf das Verriegelungselement 7 in Bezug auf den Drehpunkt des zweiten Führungsbolzens 15 ausgeübte Drehmoment größer ist als das von der Entriegelungshebelfeder 17 auf das Verriegelungselement 7 in Bezug auf den Drehpunkt des zweiten Führungsbolzens 15 ausgeübte Drehmoment, hält die Schaltfeder 10 die Entriegelungsposition des Verriegelungselements 7 in dieser vorgespannten Stellung.

Die Entriegelung des Fahrzeugsitzes wird gleichzeitig optisch mittels einer am Ende des Entriegelungshebels 8 angebrachten Markierung 80 angezeigt, die so angebracht ist, dass sie nur in dieser Position des Entriegelungshebels für den Benutzer sichtbar ist.

Zur vollständigen Entnahme des Fahrzeugsitzes liegt der Entriegelungshebel 8 weiterhin am Anschlag 9 an, so dass der Fahrzeugsitz entgegen der Fahrtrichtung auch mit der am Sitzseitenteil oder der Führungsschiene 1 angebrachten vorderen Klaue 3 gemäß Fig. 1 aus der Verankerung mit dem bodenfesten Bolzen 4 gelöst werden kann.

Zum Wiedereinsetzen des Fahrzeugsitzes in das Fahrzeug und Verriegeln des Fahrzeugsitzes mit dem Bodenbolzen 6 ist keine Betätigung des Entriegelungshebels 8 erforderlich, da nach dem Verbinden der vorderen Klaue 3 mit dem bodenfesten Bolzen 4 gemäß Fig. 1 das Sitzuntergestell 1 um den bodenfesten Bolzen 4 geschwenkt wird, wobei Längsbewegungen des Sitzseitenteils oder der Führungsschiene 1 auch zum Ausgleich von Toleranzen möglich sind, da der Lagerbock 5 Führungsschrägen 51, 52 aufweist, durch die der Lagerbock 5 und damit das Sitzseitenteil oder die Führungsschiene 1. zum Bodenbolzen 6 zentriert werden.

Das Verriegelungselement 7 befindet sich aufgrund der Wirkung der Schaltfeder 10 weiterhin in der vorgespannten, entriegelten Position gemäß Fig. 4, wobei eine Steuerkante 71 des Verriegelungselements 7 sich vor der Ausnehmung 50 zur Aufnahme des Bodenbolzens 6 befindet und beim Aufsetzen auf den Bodenbolzen 6 ein Schwenken des Verriegelungselements 7 um den zweiten Führungsbolzen 15 entgegen der Vorspannkraft der Schaltfeder 10 bewirkt. Sobald das Verriegelungselement 7 die in Fig. 3 dargestellte Zwischenstellung erreicht hat, ändert die Schaltfeder 10 ihre Wirkung und schaltet das Verriegelungselement 7 in die Verriegelungsstellung um. Damit greift die Klaue 70 des Verriegelungselements 7 um den Bodenbolzen 6 und der Entriegelungshebel 8 wird durch die Vorspannkraft der Entriegelungshebelfeder 17 automatisch in die in Fig. 2 dargestellte Verriegelungsstellung zurückgeführt.

Die erfindungsgemäße Lösung ist nicht auf das vorstehend beschriebene Ausführungsbeispiel beschränkt, sondern kann auch bei gleicher Funktion des Verriegelungselements durch andere Steuer- und Schaltelemente realisiert werden. Auch ist die Anwendung der erfindungsgemäßen Vorrichtung nicht auf die Anbringung an einem Sitzseitenteil eines Fahrzeugsitzes beschränkt, sondern kann auch auf die Anbringung der Verbindungsvorrichtung an einer Sitzverstellschiene oder dergleichen übertragen werden, mit der eine Längsverstellung eines Fahrzeugsitzes möglich ist und die Verbindungsvorrichtung eine Sitzentnahme gestattet.

### Bezugszeichenliste

- 1: Sitzseitenteil oder Führungsschiene
- 2a: Sitzpolster
- 2b: Sitzlehne
- 3: Klaue
- 4: bodenfester Bolzen
- 5: Lagerbock
- 6: Bodenbolzen
- 7: Verriegelungselement
- 8: Entriegelungshebel
- 9: Anschlag
- 10: Schaltfeder
- 11: erste Kulisse
- 12: zweite oder Längskulisse
- 13: dritte Kulisse
- 14: erster Führungsbolzen
- 15: zweiter Führungsbolzen
- 16: Steuer- und Verriegelungsbolzen
- 17: Entriegelungshebelfeder
- 18: Stift
- 19: Öffnung
- 20: Entriegelungshebel-Anlenkung
- 21: erste Federanlenkung
- 22: zweite Federanlenkung
- 50: Ausnehmung
- 51,52: Führungsschrägen
- 70: Klaue
- 71: Steuerkante
- 80: Markierung
- 111: Schiebeabschnitt
- 112: Schwenkabschnitt
- 113: Übergang
- 131: Anlagekante
- 132: Freischnitt

## Patentansprüche

1. Vorrichtung zum Verbinden eines Fahrzeugsitzes mit einem Fahrzeugboden, der mindestens ein Verbindungselement (6), das mit einem mit einem Sitzseitenteil (1) oder einer Führungsschiene des Fahrzeugsitzes verbundenen und mittels eines Entriegelungshebels (8) betätigbaren Verriegelungselement (7) in Eingriff bringbar ist, und eine zwischen dem Sitzseitenteil (1) oder der Führungsschiene des Fahrzeugsitzes, dem Verriegelungselement (7) und dem Entriegelungshebel (8) wirksame Kulissensteuerung (9 - 16) aufweist, die in einer Verriegelungsstellung und in einer ersten Phase zur Entriegelung des Fahrzeugsitzes durch Betätigen des Entriegelungshebels (8) bis zu einer vorgegebenen Zwischenstellung des Entriegelungshebels (8) die Verriegelung zwischen dem Verbindungselement (6) und dem Verriegelungselement (7) aufrechterhält und in einer zweiten Phase zur Entriegelung des Fahrzeugsitzes das Verriegelungselement (7) in eine Entriegelungsstellung umschaltet, in der die Verriegelung zwischen dem Verbindungselement (6), dem Verriegelungselement (7) und dem Sitzseitenteil (1) oder der Führungsschiene des Fahrzeugsitzes aufgehoben ist,
**dadurch gekennzeichnet, dass**
das Sitzseitenteil (1) oder die Führungsschiene über eine vordere Sitzanbindung und eine hintere Sitzverriegelung mit dem Fahrzeugboden verbunden ist, wobei die vordere Sitzanbindung aus einer nach vorne offenen Klaue (3), in die ein bodenfester Bolzen (4) eingreift und die hintere Sitzverriegelung aus dem Verbindungselement (6) und dem Verriegelungselement (7) besteht, und dass die Kulissensteuerung (9-16)
- ein erstes Kulissensteuerelement (11, 14) zur Erzeugung einer Schiebe- und Schwenkbewegung des Verriegelungselements (7),
- ein zweites Kulissensteuerelement (12, 15) zur Führung des Verriegelungselements (7) in Längsrichtung des Fahrzeugsitzes und Ausbildung einer Schwenkachse,
- ein drittes Kulissensteuerelement (13, 16) zur Steuerung und Verriegelung sowie Entriegelung des Verriegelungselements (7) und
- eine Schaltfeder (10), die das Verriegelungselement (7) in der Verriegelungsstellung und in der ersten Phase zur Entriegelung des Fahrzeugsitzes in Richtung auf eine Aufrechterhaltung der Verriegelung zwischen dem Verbindungselement (6) und dem Verriegelungselement (7) vorspannt und in der zweiten Phase zur Entriegelung des Fahrzeugsitzes das Verriegelungselement (7) in Richtung auf die Entriegelungsstellung vorspannt,
aufweist.

2. Vorrichtung nach Anspruch 1, **dadurch gekennzeichnet, dass** in der ersten Phase zur Entriegelung des Fahrzeugsitzes der Entriegelungshebel (8) in Richtung auf eine der Verriegelungsstellung entsprechende Ausgangsstellung vorgespannt ist und die Kulissensteuerung (9-16) das Verriegelungselement (7) bei Freigabe des Entriegelungshebels (8) in die Verriegelungsstellung zurückschaltet, dass die zweite Phase zur Entriegelung des Fahrzeugsitzes durch eine weitere Betätigung des Entriegelungshebels (8) in Richtung auf eine Entriegelung des Fahrzeugsitzes eingeleitet wird und dass in der zweiten Phase das Verriegelungselement (7) auf die Entriegelungsstellung vorgespannt ist.

3. Vorrichtung nach Anspruch 1, **dadurch gekennzeichnet, dass** die Zwischenstellung des Entriegelungshebels (8) durch einen am Sitzseitenteil (1) oder an der Führungsschiene angeordneten Anschlag (9) bestimmt ist.

4. Vorrichtung nach Anspruch 2, **dadurch gekennzeichnet, dass** in der zweiten Phase zur Entriegelung des Fahrzeugsitzes das Verbindungselement (6) an eine Klaue (70) des Verriegelungselements (7) anschlägt und das Verriegelungselement (7) in die Entriegelungsstellung schwenkt.

5. Vorrichtung nach mindestens einem der vorangehenden Ansprüche, **dadurch gekennzeichnet, dass** die Kulissensteuerelemente (11 - 16) im Verriegelungselement (7) angeordnete erste, zweite und dritte Kulissen (11, 12, 13) aufweisen, dass in die erste und zweite Kulisse (11, 12) mit dem Sitzseitenteil oder der Führungsschiene (1) verbundene erste und zweite Führungsbolzen (14, 15) eingreifen, dass in die dritte Kulisse (13) ein mit dem Entriegelungshebel (8) verbundener Steuer- und Verriegelungsbolzen (16) eingreift und dass die Schaltfeder (10) zwischen dem Verriegelungselement (7) und einer Anbindung am Sitzseitenteil oder der Führungsschiene (1) angeordnet ist.

6. Vorrichtung nach Anspruch 5, **dadurch gekennzeichnet, dass** die dritte Kulisse (13) eine Anlagekante (131) und einen Freischnitt (132) für den Steuer- und Verriegelungsbolzen (16) aufweist und dass der Entriegelungshebel (8) in Bezug auf die Anlagekante (131) der ersten Kulisse (13) so angelenkt ist, dass beim Betätigen des Entriegelungshebels (8) das Verriegelungselement (7) gegen die Federkraft der Schaltfeder (10) bewegt wird.

7. Vorrichtung nach Anspruch 6, **dadurch gekennzeichnet, dass** der Steuer- und Verriegelungsbolzen (16) in der Verriegelungsstellung sowie in der ersten Phase der Kulissensteuerung im wesentlichen spielfrei in einem vertikalen Schlitz (133) der dritten Kulisse (13) geführt ist.

8. Vorrichtung nach Anspruch 6 oder 7, **dadurch gekennzeichnet, dass** die zweite Kulisse (12) als in Längsrichtung des Fahrzeugsitzes ausgerichtete Längskulisse ausgebildet ist, die bei einem durch die Betätigung des Entriegelungshebels (8) bewirktes Entlanggleiten des Steuerungs- und Verriegelungsbolzens (16) an der Anlagekante (131) der dritten Kulisse (13) in der ersten Phase zur Entriegelung des Fahrzeugsitzes im Zusammenwirken mit den Führungsbolzen (14, 15) ausschließlich eine in Längsrichtung (L) gerichtete Bewegung des Verriegelungselements (7) in Richtung auf eine Anlenkung (20) des Entriegelungshebels (8) zulässt.

9. Vorrichtung nach mindestens einem der voranstehenden Ansprüche, **dadurch gekennzeichnet, dass** die erste Kulisse (11) einen in Längsrichtung (L) des Fahrzeugsitzes ausgerichteten Schiebeabschnitt (111) und einen auf einem Radius um den zweiten Führungsbolzen (15) liegenden Schwenkabschnitt (112) aufweist, wobei der in die erste Kulisse (11) eingreifende erste Führungsbolzen (14) in der ersten Phase zur Entriegelung des Fahrzeugsitzes in den Schiebeabschnitt (111) und in der zweiten Phase zur Entriegelung des Fahrzeugsitzes in den Schwenkabschnitt (112) der ersten Kulisse (111) eingreift, in dem das Verriegelungselement (7) um den zweiten Führungsbolzen (15) geschwenkt wird.

10. Vorrichtung nach mindestens einem der voranstehenden Ansprüche, **dadurch gekennzeichnet, dass** eine Entriegelungshebelfeder (17) auf der dem Steuer- und Verriegelungsbolzen (16) entgegengesetzten Seite des Entriegelungshebels (8) in Bezug auf die mit einem Betätigungsgriff versehene Anlenkung (20) des Entriegelungshebels (8) angelenkt ist.

11. Vorrichtung nach mindestens einem der voranstehenden Ansprüche, **dadurch gekennzeichnet, dass** die Schaltfeder (10) derart mit dem Verriegelungselement (7) verbunden ist, dass das von der Schaltfeder (10) in Bezug auf den zweiten Führungsbolzen (15) auf das Verriegelungselement (7) ausgeübte Drehmoment größer ist als das von der Entriegelungshebelfeder (17) ausgeübte Drehmoment auf das Verriegelungselement (7) in Bezug auf den zweiten Führungsbolzen (15).

12. Vorrichtung nach mindestens einem der voranstehenden Ansprüche, **dadurch gekennzeichnet, dass** der Entriegelungshebel (8) mit einer in der Entriegelungsstellung des Fahrzeugsitzes sichtbaren Kennung (80) versehen ist.

13. Vorrichtung nach mindestens einem der voranstehenden Ansprüche, **dadurch gekennzeichnet, dass** das Verriegelungselement (7) eine in der Verriegelungsstellung um den Bodenbolzen (6) greifende Klaue (70) aufweist, gegenüber der eine Steuerkante (71) des Verriegelungselements (7) angeordnet ist, die bei einem Einsetzen des Fahrzeugsitzes an den Bodenbolzen (6) anstößt und eine selbsttätige Verriegelung des Verriegelungselements (7) mit dem Bodenbolzen (6) auslöst.

14. Vorrichtung nach Anspruch 13, **dadurch gekennzeichnet, dass** bei der selbsttätigen Verriegelung des Verriegelungselements (7) mit dem Bodenbolzen (6) das Verriegelungselement (7) gegen die Federkraft der Schaltfeder (10) um den zweiten Führungsbolzen (15) in die Verriegelungsstellung schwenkt und die Klaue des Verriegelungselements (7) um den Bodenbolzen (6) greift.

15. Vorrichtung nach mindestens einem der voranstehenden Ansprüche, **dadurch gekennzeichnet, dass** ein mit dem Sitzseitenteil (1) oder der Führungsschiene verbundener Lagerbock (5) zu beiden Seiten einer dem Bodenbolzen (6) angepassten Ausnehmung (50) Einführungsschrägen (51, 52) aufweist, die beim Einsetzen des Fahrzeugsitzes den Lagerbock (5) zum Bodenbolzen (6) zentrieren.

## Claims

1. Device for connecting a vehicle seat to a vehicle floor, which comprises at least one connecting element (6), which may be brought into engagement with a locking element (7) that is connected to a lateral seat part (1) or a guide rail of the vehicle seat and able to be actuated by means of an unlocking lever (8), and a slide control element (9 - 16) which is effective between the lateral seat part (1) or the guide rail of the vehicle seat, the locking element (7) and the unlocking lever (8) and which, in a locked position and in a first phase for unlocking the vehicle seat by actuating the unlocking lever (8), maintains the lock between the connecting element (6) and the locking element (7) as far as a predetermined intermediate position of the unlocking lever (8) and, in a second phase for unlocking the vehicle seat, switches the locking element (7) into an unlocked position in which the lock between the connecting element (6), the locking element (7) and the lateral seat part (1) or the guide rail of the vehicle seat is released,
**characterized in that**
the lateral seat part (1) or the guide rail is connected to the vehicle floor via a front seat connection and a rear seat lock, the front seat connection consisting of a claw (3) which is open to the front and in which a bolt (4) which is fixed to the floor engages, and the rear seat lock consisting of the connecting element (6) and the locking element (7) and **in that** the slide control element (9 - 16) comprises
- a first slide control element (11, 14) for producing a sliding and pivoting movement of the locking element (7),
- a second slide control element (12, 15) for guiding the locking element (7) in the longitudinal direction of the vehicle seat and forming a pivot axis,
- a third slide control element (13, 16) for controlling and locking as well as unlocking the locking element (7) and
- a switching spring (10) which pretensions the locking element (7) in the locked position and in the first phase for unlocking the vehicle seat in the direction of maintaining the lock between the connecting element (6) and the locking element (7), and pretensions the locking element (7) in the direction of the unlocked position in the second phase for unlocking the vehicle seat.

2. Device according to Claim 1, **characterized in that** in the first phase for unlocking the vehicle seat, the unlocking lever (8) is pretensioned in the direction of an initial position corresponding to the locked position, and the slide control element (9 - 16) switches back the locking element (7), when the unlocking lever (8) is released, into the locked position, **in that** the second phase for unlocking the vehicle seat is initiated by a further actuation of the unlocking lever (8) in the direction of unlocking of the vehicle seat and **in that** in the second phase the locking element (7) is pretensioned to the unlocked position.

3. Device according to Claim 1, **characterized in that** the intermediate position of the unlocking lever (8) is determined by a stop (9) arranged on the lateral seat part (1) or on the guide rail.

4. Device according to Claim 2, **characterized in that**, in the second phase for unlocking the vehicle seat, the connecting element (6) strikes a claw (70) of the locking element (7) and the locking element (7) pivots into the unlocked position.

5. Device according to at least one of the preceding claims, **characterized in that** the slide control elements (11 - 16) have first, second and third slide guides (11, 12, 13) arranged in the locking element (7), **in that** first and second guide bolts (14, 15) connected to the lateral seat part or the guide rail (1) engage in the first and second slide guides (11, 12), **in that** a control and locking bolt (16) connected to the unlocking lever (8) engages in the third slide guide (13) and **in that** the switching spring (10) is arranged between the locking element (7) and a connection to the lateral seat part or the guide rail (1).

6. Device according to Claim 5, **characterized in that** the third slide guide (13) has a locating edge (131) and a cut-out (132) for the control and locking bolt (16), and **in that** the unlocking lever (8) is articulated relative to the locating edge (131) of the first slide guide (13) such that, when actuating the unlocking lever (8), the locking element (7) is moved against the spring force of the switching spring (10).

7. Device according to Claim 6, **characterized in that** the control and locking bolt (16) is guided in the locked position as well as in the first phase of the slide control element substantially without clearance in a vertical slot (133) of the third slide guide (13).

8. Device according to Claim 6 or 7, **characterized in that** the second slide guide (12) is configured as a longitudinal slide guide aligned in the longitudinal direction of the vehicle seat which, when the control and locking bolt (16) slides along the locating edge (131) of the third slide guide (13), effected by the actuation of the unlocking lever (8), in the first phase for unlocking the vehicle seat in cooperation with the guide bolt (14, 15), exclusively allows a movement of the locking element (7), oriented in the longitudinal direction (L), in the direction of an articulation (20) of the unlocking lever (8).

9. Device according to at least one of the preceding claims, **characterized in that** the first slide guide (11) comprises a sliding portion (111) aligned in the longitudinal direction (L) of the vehicle seat and a pivoting portion (112) located on a radius about the second guide bolt (15), the first guide bolt (14) which engages in the first slide guide (11) in the first phase for unlocking the vehicle seat engaging in the sliding portion (111) and in the second phase for unlocking the vehicle seat engaging in the pivoting portion (112) of the first slide guide (111), in which the locking element (7) is pivoted about the second guide bolt (15).

10. Device according to at least one of the preceding claims, **characterized in that** an unlocking lever spring (17) is articulated on the side of the unlocking lever (8) opposing the control and locking bolt (16) relative to the articulation (20) of the unlocking lever (8) which is provided with an actuating handle.

11. Device according to at least one of the preceding claims, **characterized in that** the switching spring (10) is connected to the locking element (7) such that the torque exerted on the locking element (7) by the switching spring (10) relative to the second guide bolt (15) is greater than the torque exerted by the unlocking lever spring (17) on the locking element (7) relative to the second guide bolt (15).

12. Device according to at least one of the preceding claims, **characterized in that** the unlocking lever (8) is provided with an identifier (80) which is visible in the unlocked position of the vehicle seat.

13. Device according to at least one of the preceding claims, **characterized in that** the locking element (7) has a claw (70) engaging in the locked position around the floor bolt (6), opposite which claw a control edge (71) of the locking element (7) is arranged which, during insertion of the vehicle seat, strikes against the floor bolt (6) and triggers an automatic locking of the locking element (7) to the floor bolt (6).

14. Device according to Claim 13, **characterized in that**, with the automatic locking of the locking element (7) to the floor bolt (6), the locking element (7) pivots counter to the spring force of the switching spring (10) about the second guide bolt (15) into the locked position and the claw of the locking element (7) engages around the floor bolt (6).

15. Device according to at least one of the preceding claims, **characterized in that** a bearing block (5) connected to the lateral seat part (1) or the guide rail has, on both sides of a recess (50) adapted to the floor bolt (6), lead-in chamfers (51, 52) which centre the bearing block (5) relative to the floor bolt (6) when inserting the vehicle seat.

## Revendications

1. Dispositif pour la liaison d'un siège de véhicule à un plancher de véhicule, qui comprend au moins un élément de liaison (6), qui peut être amené en engagement avec un élément de verrouillage (7) relié à une partie latérale (1) du siège ou à un rail de guidage du siège de véhicule et susceptible d'être actionné au moyen d'un levier de déverrouillage (8), et une commande à glissière (9-16) agissant entre la partie latérale (1) du siège ou le rail de guidage du siège de véhicule, l'élément de verrouillage (7) et le levier de déverrouillage (8), laquelle commande le maintien, dans une position de verrouillage et dans une première phase vers le déverrouillage du siège de véhicule par actionnement du levier de déverrouillage (8) jusqu'à une position intermédiaire prédéterminée du levier de déverrouillage (8), du verrouillage entre l'élément de liaison (6) et l'élément de verrouillage (7) et, dans une seconde phase pour le déverrouillage du siège de véhicule, fait passer l'élément de verrouillage (7) dans une position de déverrouillage dans laquelle le verrouillage entre l'élément de liaison (6), l'élément de verrouillage (7) et la partie latérale de siège (1) ou le rail de guidage du siège automobile, est annulé,
**caractérisé en ce que**
la partie latérale de siège (1) ou le rail de guidage est relié au plancher du véhicule via une liaison avant et un verrouillage arrière, la liaison avant étant constituée d'une griffe (3) ouverte vers l'avant, dans laquelle s'engage un goujon (4) solidaire du plancher, et le verrouillage arrière du siège étant constitué de l'élément de liaison (6) et de l'élément de verrouillage (7), et **en ce que** la commande à glissière (9-16) comprend :
- un premier élément de commande à glissière (11, 14) pour engendrer un mouvement de translation et de pivotement de l'élément de verrouillage (7),
- un second élément de commande à glissière (12, 15) pour guider l'élément de verrouillage (7) en direction longitudinale du siège de véhicule et pour réaliser un axe de pivotement,
- un troisième élément de commande à glissière (13, 16) pour la commande et le verrouillage ainsi que le déverrouillage de l'élément de verrouillage (7), et
- un ressort de commutation (10) qui précontraint l'élément de verrouillage (7), dans la position de verrouillage et dans la première phase pour le déverrouillage du siège de véhicule, en direction d'un maintien du verrouillage entre l'élément de liaison (6) et l'élément de verrouillage (7), et qui précontraint l'élément de verrouillage (7), dans la seconde phase pour le déverrouillage du siège de véhicule, en direction de la position de déverrouillage.

2. Dispositif selon la revendication 1, **caractérisé en ce que**, dans la première phase pour le déverrouillage du siège de véhicule, le levier de déverrouillage (8) est précontraint en direction d'une position de départ correspondant à la position de verrouillage, et la commande à glissière (9-16) fait repasser l'élément de verrouillage (7) jusque dans la position de verrouillage lors de la libération du levier de déverrouillage (8), **en ce que** la seconde phase pour le déverrouillage du siège de véhicule est amorcée par un autre actionnement du levier de déverrouillage (8) en direction d'un déverrouillage du siège de véhicule, et **en ce que** pendant la seconde phase l'élément de verrouillage (7) est précontraint vers la position de déverrouillage.

3. Dispositif selon la revendication 1, **caractérisé en ce que** la position intermédiaire du levier de déverrouillage (8) est déterminée par une butée (9) agencée sur la partie latérale de siège (1) ou sur un rail de guidage.

4. Dispositif selon la revendication 2, **caractérisé en ce que**, dans la seconde phase pour le déverrouillage du siège de véhicule, l'élément de liaison (6) vient buter contre une griffe (70) de l'élément de verrouillage (7) et fait pivoter l'élément de verrouillage (7) jusque dans la position de déverrouillage.

5. Dispositif selon l'une au moins des revendications précédentes, **caractérisé en ce que** les éléments de commande à glissière (11-16) comprennent une première, une seconde et une troisième glissière (11, 12, 13) agencées dans l'élément de verrouillage, **en ce qu'**un premier goujon de guidage et un second goujon de guidage (14, 15) reliés à la partie latérale de siège ou au rail de guidage (1) s'engagent dans la première et dans la seconde glissière (11, 12), **en ce qu'**un goujon de commande et de verrouillage (16), relié au levier de déverrouillage (8), s'engage dans la troisième glissière (13), et **en ce que** le ressort de commutation (10) est agencé entre l'élément de verrouillage (7) et une jonction à la partie latérale de siège ou au rail de guidage (1).

6. Dispositif selon la revendication 5, **caractérisé en ce que** la troisième glissière (13) comporte une arête de contact (131) et une découpe libre (132) pour le goujon de commande et de verrouillage (16), et **en ce que** le levier de déverrouillage (8) est articulé par rapport à l'arête de contact (131) de la première glissière (13) de telle manière que lors de l'actionnement du levier de déverrouillage (8) l'élément de verrouillage (7) est déplacé à l'encontre de la force élastique du ressort de commutation (10).

7. Dispositif selon la revendication 6, **caractérisé en ce que** le goujon de commande et de verrouillage (16) est guidé, dans la position de verrouillage ainsi que dans la première phase de la commande à glissière, sensiblement sans jeu dans une fente verticale (133) de la troisième glissière (13).

8. Dispositif selon la revendication 6 ou 7, **caractérisé en ce que** la seconde glissière (12) est réalisée sous forme d'une glissière allongée orientée dans la direction longitudinale du siège de véhicule qui, lors d'un coulissement, provoqué par l'actionnement du levier de déverrouillage (8), du goujon de verrouillage et de commande (16) le long de l'arête de contact (131) de la troisième glissière (13), dans la première phase pour le déverrouillage du siège de véhicule, autorise en coopération avec les goujons de guidage (14, 15) exclusivement un mouvement orienté en direction longitudinale (L) de l'élément de verrouillage (7) en direction d'une articulation (20) du levier de déverrouillage (8).

9. Dispositif selon l'une au moins des revendications précédentes, **caractérisé en ce que** la première glissière (11) comprend un tronçon de coulissement (111) orienté en direction longitudinale (L) du siège de véhicule et un tronçon de pivotement (112) disposé sur un rayon autour du second goujon de guidage (15), de sorte que le premier goujon de guidage (14) qui s'engage dans la première glissière (11), s'engage dans le tronçon de coulissement (111) de la première glissière (111) dans la première phase pour le déverrouillage du siège de véhicule, et s'engage dans le tronçon de pivotement (112) de la première glissière (111) dans la seconde phase pour le déverrouillage du siège de véhicule, de sorte que l'élément de verrouillage (7) est pivoté autour du second goujon de guidage (15).

10. Dispositif selon l'une au moins des revendications précédentes, **caractérisé en ce qu'**un ressort de levier de déverrouillage (17) est articulé sur le côté du levier de déverrouillage (8) opposé au goujon de commande et de verrouillage (16), par rapport à l'articulation (20) du levier de déverrouillage (8) pourvu d'une poignée d'actionnement.

11. Dispositif selon l'une au moins des revendications précédentes, **caractérisé en ce que** le ressort de commutation (10) est relié à l'élément de verrouillage (7) de telle manière que le couple de rotation exercé par le ressort de commutation (10) sur l'élément de verrouillage (7) par rapport au second goujon de guidage (15) est supérieur au couple de rotation exercé par le ressort de levier de déverrouillage (17) sur l'élément de verrouillage (7) par rapport au second goujon de guidage (15).

12. Dispositif selon l'une au moins des revendications précédentes, **caractérisé en ce que** le levier de déverrouillage (8) est pourvu d'un signe distinctif visible (80) dans la position de déverrouillage du siège de véhicule.

13. Dispositif selon l'une au moins des revendications précédentes, **caractérisé en ce que** l'élément de verrouillage (7) comporte une griffe (70) qui, dans la position de verrouillage, s'engage autour du goujon de plancher (6) et à l'opposé de laquelle est agencée l'une des arêtes de commande (71) de l'élément de verrouillage (7), qui lors d'une mise en place du siège de véhicule vient buter contre le goujon de plancher (6) et déclenche un verrouillage automatique de l'élément de verrouillage (7) avec le goujon de plancher (6).

14. Dispositif selon la revendication 13, **caractérisé en ce que** lors du verrouillage automatique de l'élément de verrouillage (7) avec le goujon de plancher (6), l'élément de verrouillage (7) pivote à l'encontre de la force de rappel du ressort de commutation (10) autour du second goujon de guidage (15) jusque dans la position de verrouillage, et la griffe de l'élément de verrouillage (7) s'engage autour du goujon de plancher (6).

15. Dispositif selon l'une au moins des revendications précédentes, **caractérisé en ce qu'**un support de montage (5), relié à la partie latérale de siège (1) ou au rail de guidage, comporte sur les deux côtés d'un évidement (50) adapté au goujon de plancher (6) des pentes d'introduction (51, 52) qui centrent le support de montage (5) par rapport au goujon de plancher (6) lors de la mise en place du siège de véhicule.
